(19) Europäisches Patentamt
European Patent Office
Office européen des brevets

(11) **EP 2 163 520 B1**

(12) **FASCICULE DE BREVET EUROPEEN**

(45) Date de publication et mention
de la délivrance du brevet:
**10.10.2018 Bulletin 2018/41**

(51) Int Cl.:
**C01B 39/02** *(2006.01)* **F28D 20/00** *(2006.01)*
**C09K 5/16** *(2006.01)* **B01J 20/32** *(2006.01)*

(21) Numéro de dépôt: **09169364.8**

(22) Date de dépôt: **03.09.2009**

(54) **Materiau et procédé de stockage d'énergie thermique.**

Material und Verfahren zur Speicherung von Wärmeenergie

Material and method for storing thermal energy

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **10.09.2008 FR 0856068**

(43) Date de publication de la demande:
**17.03.2010 Bulletin 2010/11**

(73) Titulaire: **Electricité de France**
**75008 Paris (FR)**

(72) Inventeurs:
• **Stevens, Philippe**
**77940 Noisy Rudignon (FR)**
• **Hongois, Stéphanie**
**28500 Vernouillet (FR)**

(74) Mandataire: **Cabinet Plasseraud et al**
**66, rue de la Chaussée d'Antin**
**75440 Paris Cedex 09 (FR)**

(56) Documents cités:
WO-A-03/018175 US-A- 4 461 339
US-A- 5 314 852

• TOKAREV M ET AL: "New composite sorbent CaCl2 in mesopores for sorption cooling/heating" INTERNATIONAL JOURNAL OF THERMAL SCIENCES, EDITIONS ELSEVIER, PARIS, FR, vol. 41, no. 5, 1 avril 2002 (2002-04-01), pages 470-474, XP004350500 ISSN: 1290-0729
• LEVITSKIJ E A ET AL: "Chemical heat accumulators: a new approach to accumulating low potential heat" SOLAR ENERGY MATERIALS AND SOLAR CELLS 1996 NOV 30 ELSEVIER SCIENCE B.V., vol. 44, no. 3, 30 novembre 1996 (1996-11-30), pages 219-235, XP000630800
• JANCHEN J ET AL: "Studies of the water adsorption on Zeolites and modified mesoporous materials for seasonal storage of solar heat" SOLAR ENERGY JANUARY/MARCH 2004 ELSEVIER LTD GB, vol. 76, no. 1-3, janvier 2004 (2004-01), pages 339-344, XP002529674
• STACH H ET AL: "Studies to thermochemical storage of heat" CHEMISCHE TECHNIK: TECHNISCHE CHEMIE - VERFAHRENSTECHNIK - UMWELTTECHNIK, DEUTSCHER VERLAG FUER GRUNDSTOFFINDUSTRIE GMBH, DE, vol. 52, no. 1, 1 février 2000 (2000-02-01), pages 15-18, XP008106692 ISSN: 0045-6519
• PINO L ET AL: "Composite materials based on zeolite 4A for adsorption heat pumps" ADSORPTION 1996 KLUWER ACADEMIC PUBLISHERS, vol. 3, no. 1, 1996, pages 33-40, XP002529676

**Description**

La présente invention concerne un nouveau matériau minéral à base de zéolithe et de sel minéral hygroscopique et l'utilisation d'un tel matériau pour le stockage d'énergie thermique, un procédé de préparation d'une zéolithe imprégnée et un procédé de stockage et de libération d'énergie thermique tels que définis dans les revendications.

Le chauffage et la climatisation des bâtiments consomment, en France, environ 46 % de l'énergie totale et produisent environ 20 % des gaz à effet de serre. L'exploitation optimale de la source d'énergie renouvelable que constitue le soleil pourrait contribuer à réduire considérablement la consommation d'énergie fossile et les émissions de gaz à effet de serre. Un des principaux problèmes est lié au décalage entre la disponibilité des ressources solaires et les besoins de chaleur. Ce décalage peut être un décalage dans le temps (été/hiver) ou dans l'espace (installations industrielles/zones d'habitation). Stocker le surplus d'énergie solaire thermique disponible en été ou l'énergie thermique rejetée par certaines installations industrielles pour les restituer par exemple l'hiver et/ou dans les zones d'habitation permettrait de résoudre ce problème.

Toutefois, la plupart des matériaux disponibles actuellement ne permettent pas de stocker l'énergie thermique solaire ou industrielle sur de longues durées (supérieures à une semaine) et avec une compacité suffisante pour une application résidentielle.

On peut distinguer quatre modes de stockage d'énergie thermique, à savoir

(i) le stockage sous forme de *chaleur sensible* : on appelle chaleur sensible toute chaleur qui aboutit à un changement de la température du matériau de stockage d'énergie. La quantité d'énergie stockée sous forme de chaleur sensible est égale à

$$E = m\ (\Delta T)\ c_p$$

où $m$ est la masse du matériau (en kg), $c_p$ est sa capacité thermique (exprimée en $J.K^{-1}.kg^{-1}$), et $\Delta T$ est la différence de température ;

(ii) le stockage sous forme de *chaleur latente* : on appelle chaleur latente la chaleur qui aboutit à un changement d'état d'un corps (solide-liquide, liquide-gaz) sans changement de la température de celui-ci, par exemple la chaleur nécessaire à l'évaporation de l'eau à la température d'ébullition de celle-ci ;

(iii) le stockage d'énergie thermique sous forme d'*énergie thermochimique par sorption/désorption* : l'adsorption d'un composé à la surface d'un matériau solide ou l'absorption d'un composé à l'intérieur d'un matériau solide poreux s'accompagnent généralement d'une libération de chaleur et, inversement, la désorption d'un composé adsorbé sur ou absorbé dans un matériau solide nécessite un apport d'énergie ;

(iv) le stockage d'énergie thermique sous forme d'énergie chimique par *réaction chimique réversible* : une des réactions chimiques réversibles couramment utilisées pour le stockage d'énergie thermique est la réaction d'hydratation/déshydratation de composés cristallins. L'élimination des molécules d'eau jusqu'à la forme anhydre du composé nécessite un apport d'énergie thermique (réaction endothermique) qui est de nouveau libérée lorsque le composé anhydre, ou peu hydraté, est mis en contact avec de l'eau ou de la vapeur d'eau (réaction exothermique).

Ces deux derniers modes de stockage d'énergie présentent l'avantage, par rapport aux deux premiers, de ne pas nécessiter de système d'isolation thermique. La simple conservation du matériau de stockage d'énergie thermochimique ou chimique anhydre (chargé en énergie) à l'abri de l'humidité permet en principe de retarder indéfiniment le moment du « déchargement » thermique, autrement dit le moment de la libération de l'énergie thermique emmagasinée.

La présente invention concerne une association de deux matériaux de stockage d'énergie thermique, l'un étant choisi parmi les matériaux de stockage d'énergie thermique par sorption/désorption et l'autre parmi les matériaux de stockage d'énergie thermique par hydratation/déshydratation, appelés également ci-après matériau hygroscopique ou sel minéral hygroscopique.

De tels matériaux composites à base d'un matériau de sorption et d'un sel hygroscopique sont déjà connus. Ils comportent deux composants : une matrice hôte, généralement macroporeuse ou mésoporeuse, et un sel hygroscopique inséré dans le volume poreux de celle-ci. Ils sont préparés par imprégnation du matériau solide poreux, par exemple du gel de silice, de l'alumine ou du carbone poreux, avec une solution saturée d'un sel hygroscopique tels que le CaCl2. La matrice imprégnée est ensuite séchée à haute température. Ces composites sont connus sous différentes dénominations, à savoir « sorbants sélectifs d'eau » (*Selective Water Sorbents,* voir les références [1] à [3]), « accumulateurs de chaleur chimique » (*Chemical Heat Accumulator,* voir la référence [4]) ou « sorbants composites » (*Composite Sorbents,* voir la référence [5]).

La structure particulière de tels matériaux composites présente les avantages suivants :

- les matériaux composites présentent des capacités d'absorption d'eau et des densités énergétiques supérieures à celles des matériaux de sorption/désorption seuls,
- grâce à la matrice solide, les matériaux composites peuvent être usinés en briques, granules, billes, barres, plaques etc. ce qui facilite leur manipulation et améliore leur tenue au cyclage (cycles d'hydratation/déshydratation),
- la répartition du matériau hygroscopique dans les pores de la matrice formée par l'autre matériau, améliore considérablement son accessibilité. En effet, en l'absence de matrice solide poreuse, l'hydratation du matériau hygroscopique aboutit à la formation d'une couche hydratée superficielle, dans laquelle les particules collent les unes aux autres et qui devient ainsi rapidement imperméable à la vapeur d'eau et empêche l'hydratation complète du matériau hygroscopique.

Le chlorure de calcium, dont l'utilisation pour le stockage d'énergie thermique est abondamment décrite dans l'art antérieur, présente toutefois une enthalpie de déshydratation relativement faible, de seulement 1061 kJ/kg (pour le $CaCl_2.6H_2O$) ce qui limite bien entendu sa capacité de stockage. Par ailleurs la température de déshydratation de ce sel est égale à 30 °C seulement. Cette faible température de déshydratation qui semble à première vue être un avantage peut s'avérer dans certains cas être un inconvénient. Elle interdit en effet l'utilisation de ce sel pour la production de chaleur à plus de 30 °C.

L'article de Tokarev M. et al. intitulé « New composite sorbent CaCl2 in mesopores for sorption cooling/heating », International Journal of Thermal Sciences, Editions Elsevier, Paris, volume 41, n° 5 (2002) décrit un procédé de préparation d'un matériau composite formé par une matrice amorphe en gel de silice (MCM-41) imprégnée de $CaCl_2$. La matrice MCM-41 est un matériau mésoporeux, c'est-à-dire un matériau ayant une taille moyenne de pores comprise entre 2 et 50 nm.

L'article de Levitskij et al. intitulé « Chemical Heat Accumulators : a new approach to accumulating low potential heat", Solar Energy Materials and Solar Cells, 44 (1996) 219 - 235, concerne, comme le document précédant, un matériau de stockage d'énergie chimique à base de gel de silice amorphe imprégné de sels minéraux hygroscopiques.

La Demanderesse, dans le cadre de ses recherches visant à mettre au point des matériaux de stockage d'énergie toujours plus performants, durables et faciles à manipuler, a mis au point de nouveaux matériaux composites pour le stockage d'énergie thermique.

Elle est partie, pour cela, d'une famille de matrices minérales nanoporeuses, connues en tant que matériaux de sorption pour le stockage de chaleur : les zéolithes. Elle s'est fixé pour objectif d'améliorer les capacités de stockage thermique de ces zéolithes en essayant de les imprégner, malgré la porosité extrêmement fine de ces matériaux microporeux, avec des quantités significatives de sels hygroscopiques présentant un comportement d'hydratation/déshydratation plus intéressant que le chlorure de calcium. Lors de ces essais, il s'est avéré possible de fixer dans ces matrices microporeuses plus de dix à vint pour-cent en masse de sels hygroscopiques et d'améliorer ainsi de façon notable la capacité de stockage thermique des zéolithes.

La présente invention a par conséquent pour objet un procédé de préparation d'une zéolithe imprégnée d'au moins un sel hygroscopique tel que revendiqué, comprenant

(a) la préparation d'une solution aqueuse contenant de 2 à 15 % en poids d'au moins un sel minéral hygroscopique présentant une enthalpie de déshydratation $\Delta H_{déshydratation}$ au moins égale à 1200 kJ/kg,
(b) l'imprégnation d'une zéolithe hydratée avec la solution aqueuse préparée à l'étape (a),
(c) l'évaporation de toute l'eau de la solution aqueuse en contact avec la zéolithe, par exemple par chauffage et/ou application d'une pression réduite,
(d) le séchage de la zéolithe imprégnée, obtenue à l'étape (c), par chauffage à une température comprise entre 120 °C et 250 °C, pendant une durée au moins égale à 10 heures.

La présente invention a en outre pour objet une zéolithe imprégnée obtenue par ce procédé, ainsi que l'utilisation d'une telle zéolithe pour le stockage d'énergie thermique et notamment un procédé de stockage utilisant une telle zéolithe.

Les zéolithes sont des aluminosilicates de formule générale

$$(Li, Na, K)a(Mg, Ca, Sr, Ba)b \ [Al_{(a+2b)}Si_{n-(a+2b)}O_2n].mH_2O$$

où a, b, n et m sont des entiers naturels.

Les zéolithes sont des polymères inorganiques cristallins, structurellement complexes, formés d'un enchaînement de tétraèdres d'atomes d'oxygène au centre desquels se trouvent des ions $Al^{3+}$ et $Si^{4+}$. Les tétraèdres $AlO_4^-$ et $SiO_4$ sont liées entre eux par un échange d'ions oxygène. Chaque tétraèdre d'$AlO_4^-$, présent dans la structure, apporte une charge négative qui est contre-balancée par des cations, tels que $Ca^{2+}$, $Mg^{2+}$ ou $K^+$.

Il existe plusieurs dizaines de zéolithes naturelles et environ 200 zéolithes synthétiques, classées principalement en trois types, selon leur structure et ratio de Si/Al (voir le Tableau 1 ci-dessous). On utilisera pour la présente invention de préférence des zéolithes synthétiques de type X, avec des pores présentant un diamètre d'environ 1 nm.

Tableau 1 : Principaux types de zéolithes synthétiques [7]

| Famille de zéolithe | Structure de la zéolithe naturelle correspondante | Ratio Si/Al | Type de zéolithe (exemples) | Diamètre des pores |
|---|---|---|---|---|
| Type A | Sodalite | 1 | Type 3A | 0.3 nm |
| | | | Type 4A | 0.4 nm |
| Type X | Faujasite | 1 à 1.5 | Type 13X | 1.0 nm |
| Type Y | Faujasite | 1.5 à 3 | Type Y | 0.7 nm |
| | | > 3 | Type USY (*Ultra Stable Y*) | 1.4 nm |

Il est important que la zéolithe de la présente invention soit à l'état hydraté avant d'être introduite, à l'étape (a), dans la solution de sel minéral hygroscopique, en particulier lorsque cette solution est une solution relativement concentrée en sel. En effet, si le sel ne pénètre probablement pas dans les nanopores de la zéolithe, il est essentiel de le faire entrer dans la fraction de micropores des zéolithes. Si la zéolithe est à l'état anhydre au moment où elle est introduite dans une solution concentrée de sel, il y a un risque de concentration du sel en surface des particules et, lors du séchage des particules, formation d'une couche de sel susceptible de faire barrière à la diffusion de molécules d'eau.

On entend par zéolithe hydratée, une zéolithe ayant été en contact pendant au moins 4 heures à une température de 25 °C avec une atmosphère ayant une humidité relative au moins égale à 60 %, de préférence au moins égale à 100 %.

Le document US 5 314 852 divulgue un procédé d'imprégnation d'une zéolithe anhydre avec une solution très concentrée de KOH ou d'autres métaux. La zéolithe est préalablement déshydratée et immergée dans une solution contenant 39 % en poids d'hydroxyde de potassium. Bien que ce document envisage également l'imprégnation d'une zéolithe avec du $MgSO_4$, la zéolithe imprégnée de la présente invention se distingue de celle obtenue par le procédé décrit dans US 5 314 852 par une distribution plus régulière du $MgSO_4$ dans les particules et par l'absence d'une couche de $MgSO_4$ à la surface des particules.

Le sel minéral hygroscopique utilisé dans la présente invention a de préférence une enthalpie de déshydratation supérieure à 1400 kJ/kg, et en particulier supérieure à 1600 kJ/kg. On entend par enthalpie de déshydratation ici l'enthalpie correspondant à l'élimination de l'ensemble des molécules d'eau de cristallisation depuis la forme cristalline hydratée la plus stable du sel jusqu'à la forme cristalline totalement anhydre.

Le sel minéral hygroscopique présente en outre de préférence au moins une température de déshydratation, déterminée par analyse thermogravimétrique, supérieure à 40 °C, de préférence supérieure à 60 °C.

On peut citer à titre d'exemples de sels minéraux hygroscopiques utilisables dans la présente invention le $MgSO_4$ et le $Na_2SO_4$.

Parmi ceux-ci, on préfère en particulier le sulfate de magnésium. La forme cristalline la plus stable du sulfate de magnésium, et la plus répandue dans la nature, est la forme heptahydratée ($SO_4Mg.7H_2O$) ou « epsomite ».

L'enthalpie de déshydratation totale du sulfate de magnésium est égale à 1661 kJ/kg, valeur considérablement supérieure à celle du chlorure de calcium hexahydraté ($\Delta H_{déshydratation}$ = 1061 kJ/kg).

Avantageusement, on prépare lors de l'étape (a), une solution aqueuse ayant une concentration en sel hygroscopique comprise entre 5 et 12 %, de préférence entre 8 et 10 % en poids, rapporté au poids total de la solution.

La masse de sel hygroscopique dans la solution correspond de préférence exactement à la quantité de sel hygroscopique que l'on souhaite introduire dans la zéolithe hydratée. Elle détermine ainsi le pourcentage en masse de sel dans le matériau final.

Pour favoriser l'absorption de la solution par la zéolithe et la diffusion des ions à l'intérieur d'au moins une partie du réseau poreux de celle-ci, l'étape d'imprégnation (b) est de préférence mise en oeuvre à une température supérieure à la température ambiante mais inférieure au point d'ébullition de l'eau, par exemple à une température comprise entre 70 °C et 90 °C, en particulier proche de 80 °C. Il est recommandé de laisser la solution en contact avec la zéolithe pendant un certain temps, nécessaire à la pénétration du sel dans la zéolithe. Cette durée dépend bien entendu de la viscosité de la solution et de la taille des pores de la zéolithe. La Demanderesse a constaté qu'une durée d'imprégnation comprise entre 30 et 300 minutes, de préférence entre 60 et 120 minutes, était généralement suffisante pour garantir une absorption satisfaisante du sel.

Lorsque la solution aqueuse de sel hygroscopique est relativement peu concentrée (de 2 % à environ 6 ou 7 %), cette phase d'imprégnation sert avantageusement à concentrer la solution par évaporation d'une partie de l'eau.

Comme indiqué en introduction, la Demanderesse a constaté que, contrairement à ce qu'on aurait pu penser, il était possible de charger la zéolithe avec des quantités relativement importantes de sel hygroscopique. Toutefois, lorsqu'on dépasse une certaine quantité, une fraction trop importante du sel reste à la surface des particules de zéolithe, ce qui peut poser des problèmes d'agrégation des particules entre elles à l'état hydraté. Une quantité trop importante de sel hygroscopique à la surface de la zéolithe réduit en outre l'aptitude au cyclage (cycles de déshydratation et réhydratation) du matériau. Par ailleurs, l'accessibilité des sites d'hydratation à l'intérieur de la zéolithe peut être considérablement réduite par la formation non souhaitée d'un film hydraté de sel à la surface de la zéolithe. Pour ces raisons, la solution aqueuse de sel hygroscopique préparée à l'étape (a) n'est de préférence pas une solution saturée.

Par conséquent, on choisira de préférence le rapport en poids dudit sel minéral hygroscopique, présent dans la solution d'imprégnation, à ladite zéolithe de manière à ce qu'il soit compris entre 3/97 et 30/70, de préférence entre 5/95 et 25/75, et en particulier entre 10/90 et 20/80. Ces chiffres s'entendent en considérant l'un et l'autre de ces deux composants sous leur forme anhydre, bien que la zéolithe ne soit pas utilisée sous forme anhydre mais sous forme hydratée.

Le volume de la solution d'imprégnation est de préférence choisi de manière à ce que la majeure partie, voire la totalité de celle-ci soit absorbée par la zéolithe. L'excédent de solution d'imprégnation peut éventuellement être éliminé par filtration avant l'étape d'évaporation bien qu'une telle filtration ne corresponde pas à un mode de réalisation préféré du procédé. De préférence, au moins 80 % en poids, en particulier au moins 90 % en poids de la solution d'imprégnation sont absorbés par la zéolithe au cours de l'étape d'imprégnation. Dans un mode de réalisation particulièrement préféré, la totalité de la masse de sel hygroscopique initialement introduite est absorbée par la zéolithe. Cette absorption peut être vérifiée facilement par pesée après séchage.

Le brevet US 5 885 543 divulgue un procédé d'imprégnation d'une zéolithe avec une solution aqueuse contenant des sels hygroscopiques tels que le chlorure de calcium, le sulfate de magnésium, le chlorure de potassium et l'hydroxyde de potassium. La zéolithe imprégnée préparée dans ce document est destinée à libérer du dioxyde de chlore après activation par un acide et contient par conséquent un chlorite métallique, de préférence du chlorite de sodium.

La solution d'imprégnation et la zéolithe imprégnée de la présente invention diffèrent de celles divulguées dans le brevet US 5 885 543 entre autres par le fait qu'elles sont exemptes de chlorite de métal, et notamment de chlorite de sodium.

Après imprégnation de la zéolithe avec la solution aqueuse de sel minéral hygroscopique et équilibrage de l'ensemble pendant au moins quelques dizaines de minutes, on élimine éventuellement l'excédent de solution d'imprégnation par filtration, on évapore l'eau, puis on procède au séchage de la zéolithe imprégnée à une température au moins égale à 120 °C, température en principe suffisante pour éliminer six molécules d'eau du sulfate de magnésium heptahydraté et pour chasser au moins partiellement l'eau d'adsorption fixée directement par le réseau cristallin de la zéolithe, de préférence comprise entre 120 °C et 220 °C.

Le séchage de la zéolithe imprégnée est poursuivi jusqu'à ce que le poids de celle-ci ne diminue plus lorsque la durée de séchage est allongée.

La zéolithe obtenue à l'issue de l'étape de chauffage peut être utilisée directement pour le stockage et la restitution d'énergie chimique. Elle peut se présenter en principe sous n'importe quelle forme, par exemple sous forme de briques, de granules de forme irrégulière, de billes essentiellement sphériques, de barres ou de plaques de différentes épaisseurs.

Des particules de forme irrégulière ou sphérique, de préférence sphérique, présentant une taille moyenne comprise entre 0,1 et 5 mm, de préférence entre 0,5 et 4 mm et en particulier entre 1 et 3 mm, sont particulièrement intéressantes car elles peuvent être utilisées en lit fixe ou dans un système de circulation et permettent des échanges rapides d'eau et de chaleur entre les particules et leur environnement.

Le procédé de stockage et de libération d'énergie thermique de la présente invention comprend les étapes successives suivantes :

(i) chauffage d'une zéolithe imprégnée d'au moins un sel minéral hygroscopique telle que décrite ci-dessus jusqu'à une température et pendant une durée suffisantes pour déshydrater au moins partiellement ladite zéolithe imprégnée,
(ii) conservation et/ou transport de la zéolithe imprégnée au moins partiellement déshydratée à l'abri de l'humidité, et
(iii) exposition de la zéolithe imprégnée au moins partiellement déshydratée à de la vapeur d'eau, éventuellement mélangée à d'autres gaz inertes tels que l'air.

La déshydratation de la zéolithe imprégnée est de préférence mise en oeuvre par chauffage jusqu'à une température comprise entre 90 et 160 °C, de préférence comprise entre 120 et 160 °C. L'énergie thermique fournie pour obtenir la déshydratation au moins partielle du sel minéral hygroscopique et/ou du squelette solide de la zéolithe est ainsi accumulée et peut être stockée presque indéfiniment et transportée facilement à la seule condition de maintenir la zéolithe à l'abri de l'humidité, dans des compartiments ou récipients étanches.

L'énergie thermique peut en principe provenir de n'importe quelle source de chaleur. On citera ici, à titre d'exemple, simplement deux types d'énergies thermiques, disponibles en grande quantité et à faible coût et qui sont avantageusement stockées pour être libérées à un autre moment ou en un endroit différent. Le premier type d'énergie thermique disponible est l'énergie solaire, abondante en été et très recherchée en hiver. Un autre type d'énergie thermique qu'il est très avantageux de stocker pour la transporter ailleurs est la chaleur industrielle générée par exemple dans des centrales d'énergie, des raffineries ou autres usines de transformation de matière.

La chaleur libérée au cours de l'étape d'hydratation (iii) est de préférence utilisée pour le chauffage de bâtiments, en particulier pour le chauffage d'habitations.

## Exemple

Une étude expérimentale a permis de comparer les performances thermiques d'une zéolithe imprégnée de sulfate de magnésium à celles d'un gel de silice imprégné du même sel hygroscopique. Des échantillons de zéolithe et de gel de silice ont été imprégnés de sulfate de magnésium selon le protocole décrit précédemment :
Une solution aqueuse de sulfate de magnésium (29,4 g.L$^{-1}$) est préparée par dissolution de 8,8 g de sel hygroscopique dans 300 mL d'eau à une température de 80°C. On introduit ensuite, dans une telle solution, respectivement :

- 50 g de zéolithe (fournisseur MERCK) ou
- 50 g de gel de silice (fournisseur MERCK)

Les caractéristiques des matériaux de base utilisés (zéolithe, gel de silice et sulfate de magnésium) sont présentées dans le Tableau 2 suivant.

Tableau 2 : Caractéristiques des matériaux utilisés pour la préparation des produits composites

| Type de matériau | Forme | Marque | Diamètre des billes | Diamètre des pores cristallins | Densité apparente |
|---|---|---|---|---|---|
| Zéolithe | Tamis moléculaire (billes) | MERCK | 2 mm | 1 nm | 660 kg.m$^{-3}$ |
| Gel de silice | Billes | MERCK | 2-5 mm | 2.0-2.5 nm | 750 kg.m$^{-3}$ |
| Sulfate de magnésium | Poudre | AnalaR NORMAPUR (Prolabo) | - | - | 600 kg.m$^{-3}$ |

On laisse chacun des mélanges préparés ci-dessus reposer à une température comprise entre 70 et 80 °C pendant une à deux heures. Après évaporation totale de l'eau, les matériaux sont séchés pendant 24 heures à 150°C.
On obtient ainsi une zéolithe imprégnée contenant 15 % en masse de sulfate de magnésium (ZM15), ainsi qu'un gel de silice contenant 16% en masse de sulfate de magnésium (SM16).
Quatre échantillons, c'est-à-dire respectivement 25 g de zéolithe pure, 25 g de zéolithe imprégnée, 25 g de gel de silice pur et 25 g de gel de silice imprégné sont hydratés dans un réacteur ouvert, à l'aide d'un flux d'air humide entrant, dont le débit est contrôlé et mesuré grâce à un débitmètre à bille. Le réacteur, thermiquement isolé (non isotherme), est muni de thermocouples pour le suivi de la température. L'air qui entre dans le système à température ambiante subit une élévation de température causée par la chaleur d'hydratation du matériau. L'évolution de la réaction d'hydratation est suivie par mesure de :

- la température de l'air saturé en eau en entrée
- la température du matériau en cours d'hydratation
- la prise de masse du matériau en fin d'hydratation
- l'hygrométrie relative et la température de l'air en sortie du réacteur.

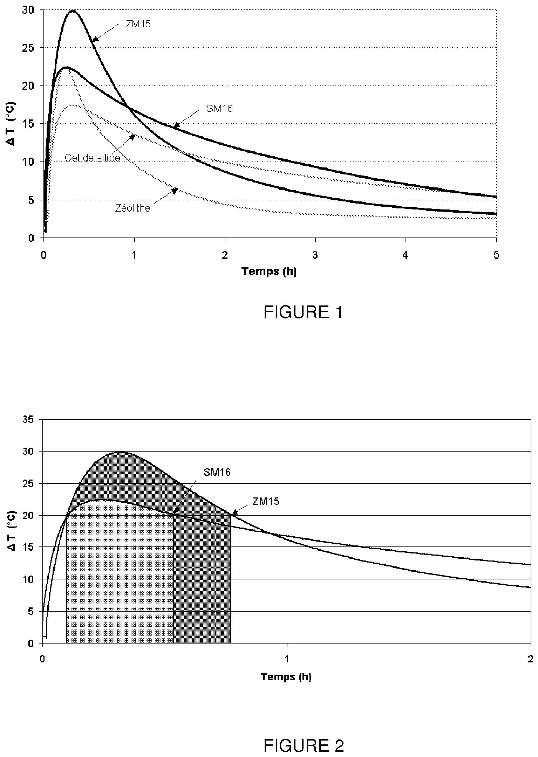

La Figure 1 présente l'évolution de la différence entre la température de l'air entrant dans le réacteur (température ambiante) et la température de l'air en sortie du réacteur au cours du temps.
L'aire sous chacune des courbes correspond à l'énergie thermique libérée par le matériau en question.
Lorsqu'on considère uniquement l'énergie thermique totale dégagée, au bout de cinq heures, par les deux matériaux composites ZM15 et SM16, ces deux matériaux semblent à peu près équivalents et le matériau comparatif, SM16, libère même une quantité totale d'énergie thermique légèrement supérieure à celle dégagée par le ZM15 selon l'invention.
Toutefois, dans le domaine technique du chauffage d'espaces, l'énergie thermique récupérée à haute température a considérablement plus de valeur que l'énergie thermique à température moyenne. Autrement dit, on estime généralement qu'une différence de température entre la température de la pièce et le matériau chauffant d'au moins 20 °C est nécessaire pour pouvoir chauffer ladite pièce de façon satisfaisante.

En analysant les courbes de la figure 1 à la lumière de cette exigence, on voit aisément que la quantité d'énergie thermique récupérée sous forme d'une ∆T° d'au moins 20 °C (= aire sous la courbe entre les deux points d'intersection avec la ligne horizontale passant par 20 °C représentée à la Figure 2) est considérablement plus élevée pour le matériau composite selon l'invention ZM15 que pour le matériau composite comparatif SM16.

[1] Yu. I. Aristov, G. Restuccia, G. Cacciola, V. N. Parmon, A family of new working materials for solid sorption air conditioning systems, Applied Thermal Engineering, vol. 22, tome 2, 2002, pp 191-204.

[2] B. Dawoud, Yu. I. Aristov, Experimental study on the kinetics of water vapor sorption on selective water sorbents, silica gel and alumina under typical operating conditions of sorption heat pumps, International Journal of Heat and Mass Transfer, vol. 46, tome 2, 2003, pp 273-281.

[3] A. Freni, F. Russo, S. Vasta, M. Tokarev, Yu.I. Aristov, G. Restuccia, An advanced solid sorption chiller using SWS-1L, Applied Thermal Engineering, vol. 27, tome 13, 2007, pp 2200-2204

[4] E. A. Levitskij, Yu. I. Aristov, M. M. Tokarev, V. N. Parmon, "Chemical Heat Accumulators": A new approach to accumulating low potential heat, Solar Energy Materials and Solar Cells, vol. 44, tome 3, 1996, pp 219-235.

[5] D. Zhu, H. Wu, S. Wang, Expérimental study on composite silica gel supported CaCl2 sorbent for low grade heat storage, International Journal of Thermal Sciences, vol. 45, tome 8, 2006pp 804-813.

[6] H. Wu, S. Wang, D. Zhu, Effects of impregnating variables on dynamic sorption characteristics and storage properties of composite sorbent for solar heat storage, Solar Energy, vol. 81, tome 7, 2007, pp 864-871.

[7] R.T. Yang, Adsorbents - Fundamentals and Applications, John Wiley & Sons, Inc., New Jersey, 2003.

**Revendications**

1. Procédé de préparation d'une zéolithe imprégnée, comprenant

    (a) la préparation d'une solution aqueuse contenant de 2 à 15 % en poids d'au moins un sel minéral hygroscopique présentant une enthalpie de déshydratation ∆H$_{déshydratation}$ au moins égale à 1200 kJ/kg,
    (b) l'imprégnation d'une zéolithe hydratée avec la solution aqueuse préparée à l'étape (a),
    (c) l'évaporation de toute l'eau de la solution aqueuse en contact avec la zéolithe,
    (d) le séchage de la zéolithe imprégnée, obtenue à l'étape (c), par chauffage à une température comprise entre 120 °C et 250 °C, pendant une durée au moins égale à 10 heures,

    la zéolithe hydratée étant une zéolithe ayant été en contact pendant au moins 4 heures à une température de 25 °C avec une atmosphère ayant une humidité relative au moins égale à 60 %.

2. Procédé de préparation d'une zéolithe imprégnée selon la revendication 1, **caractérisé par le fait que** l'étape d'imprégnation (b) est mise en oeuvre à une température comprise entre 70 °C et 90 °C et pendant une durée comprise entre 30 et 300 minutes, de préférence entre 60 et 120 minutes.

3. Procédé de préparation d'une zéolithe imprégnée selon l'une quelconque des revendications précédentes, **caractérisé par le fait que** la solution de sel minéral hygroscopique est exempte de chlorite de sodium.

4. Procédé de préparation d'une zéolithe imprégnée selon l'une quelconque des revendications précédentes, **caractérisé par le fait que** le rapport en poids dudit sel minéral hygroscopique, considéré sous sa forme anhydre, à ladite zéolithe, également considérée sous sa forme anhydre, est compris entre 3/97 et 30/70, de préférence entre 5/95 et 25/75, et en particulier entre 10/90 et 20/80.

5. Procédé de préparation d'une zéolithe imprégnée selon l'une quelconque des revendications précédentes, **caractérisé par le fait que** le sel minéral est le sulfate de magnésium.

6. Procédé de préparation d'une zéolithe imprégnée selon l'une quelconque des revendications précédentes, **caractérisé par le fait que** le séchage de la zéolithe imprégnée (étape (d)) est mis en oeuvre à une température comprise entre 120 et 220 °C, de préférence jusqu'à ce que son poids ne diminue plus.

7. Zéolithe imprégnée d'au moins un sel minéral hygroscopique susceptible d'être obtenue par un procédé selon l'une quelconque des revendications précédentes.

**8.** Zéolithe imprégnée selon la revendication 7, **caractérisée par le fait qu'**elle se présente sous forme de particules présentant une taille moyenne comprise entre 0,1 et 5 mm, de préférence entre 0,5 et 4 mm et en particulier entre 1 et 3 mm.

**9.** Zéolithe imprégnée selon les revendications 7 ou 8, **caractérisée par le fait que** les particules sont des particules essentiellement sphériques.

**10.** Utilisation d'une zéolithe imprégnée d'au moins un sel minéral hygroscopique selon l'une quelconque des revendications 7 à 9, pour le stockage d'énergie thermique.

**11.** Procédé de stockage et de libération d'énergie thermique comprenant les étapes successives suivantes :

(i) chauffage d'une zéolithe imprégnée d'au moins un sel minéral hygroscopique selon l'une quelconque des revendications 7 à 9 jusqu'à une température et pendant une durée suffisantes pour déshydrater au moins partiellement ladite zéolithe imprégnée,
(ii) conservation et/ou transport de la zéolithe imprégnée au moins partiellement déshydratée à l'abri de l'humidité, et
(iii) exposition de la zéolithe imprégnée au moins partiellement déshydratée à de la vapeur d'eau, éventuellement mélangée à d'autres gaz inertes tels que l'air.

**12.** Procédé de stockage et de libération d'énergie thermique selon la revendication 11, **caractérisé par le fait qu'**au cours de l'étape de déshydratation (i), la zéolithe imprégnée est chauffée jusqu'à une température comprise entre 90 et 160 °C, de préférence comprise entre 120 et 160 °C.

**13.** Procédé de stockage et de libération d'énergie thermique selon la revendication 11 ou 12, **caractérisé par le fait que** l'énergie thermique servant au chauffage de la zéolithe imprégnée, au cours de l'étape de déshydratation (i), est l'énergie solaire ou de la chaleur générée par des procédés industriels.

**14.** Procédé de stockage et de libération d'énergie thermique selon l'une quelconque des revendications 11 à 13, **caractérisé par le fait que** la chaleur libérée au cours de l'étape d'hydratation (iii) est utilisée pour le chauffage de bâtiments, en particulier pour le chauffage d'habitations.

**Patentansprüche**

**1.** Verfahren zur Herstellung eines imprägnierten Zeoliths, das Folgendes umfasst:

(a) die Herstellung einer wässrigen Lösung, die 2 bis 15 Gew.-% mindestens eines hygroskopischen Mineralsalzes enthält, das eine Dehydratisierungsenthalpie $\Delta H_{Dehydratisierung}$ von mindestens gleich 1200 kJ/kg aufweist,
(b) die Imprägnierung eines hydrierten Zeoliths mit der im Schritt (a) hergestellten wässrigen Lösung,
(c) die Verdunstung des gesamten Wassers der wässrigen Lösung, die sich im Kontakt mit dem Zeolithen befindet,
(d) die Trocknung des im Schritt (c) erhaltenen imprägnierten Zeoliths durch Erhitzung auf eine Temperatur, die zwischen 120 °C und 250 °C enthalten ist, während einer Dauer von mindestens gleich 10 Stunden,

wobei der hydrierte Zeolith ein Zeolith ist, der während mindestens 4 Stunden bei einer Temperatur von 25 °C mit einer Atmosphäre mit einer relativen Feuchtigkeit von mindestens gleich 60 % in Kontakt war.

**2.** Verfahren zur Herstellung eines imprägnierten Zeoliths nach Anspruch 1, **dadurch gekennzeichnet, dass** der Schritt zur Imprägnierung (b) bei einer Temperatur, die zwischen 70 °C und 90 °C enthalten ist, und während einer Dauer durchgeführt wird, die zwischen 30 und 300 Minuten, vorzugsweise zwischen 60 und 120 Minuten, enthalten ist.

**3.** Verfahren zur Herstellung eines imprägnierten Zeoliths nach einem der vorhergehenden Ansprüche, **dadurch gekennzeichnet, dass** die hygroskopische Mineralsalzlösung von Natriumchlorit befreit wird.

4. Verfahren zur Herstellung eines imprägnierten Zeoliths nach einem der vorhergehenden Ansprüche, **dadurch gekennzeichnet, dass** das Gewichtsverhältnis des hygroskopischen Mineralsalzes, in seiner wasserfreien Form betrachtet, zu dem sich ebenfalls in seiner wasserfreien Form betrachteten Zeolithen zwischen 3/97 und 30/70, vorzugsweise zwischen 5/95 und 25/75 und insbesondere zwischen 10/90 und 20/80 beträgt.

5. Verfahren zur Herstellung eines imprägnierten Zeoliths nach einem der vorhergehenden Ansprüche, **dadurch gekennzeichnet, dass** das Mineralsalz Magnesiumsulfat ist.

6. Verfahren zur Herstellung eines imprägnierten Zeoliths nach einem der vorhergehenden Ansprüche, **dadurch gekennzeichnet, dass** die Trocknung des imprägnierten Zeoliths (Schritt (d)) bei einer Temperatur, die zwischen 120 und 220 °C enthalten ist, vorzugsweise durchgeführt wird, bis sein Gewicht nicht mehr abnimmt.

7. Mit mindestens einem hygroskopischen Mineralsalz imprägnierter Zeolith, der durch ein Verfahren nach einem der vorhergehenden Ansprüche erhalten werden kann.

8. Imprägnierter Zeolith nach Anspruch 7, **dadurch gekennzeichnet, dass** er die Form von Partikeln aufweist, die eine durchschnittliche Größe aufweisen, die zwischen 0,1 und 5 mm, vorzugsweise zwischen 0,5 und 4 mm und insbesondere zwischen 1 und 3 mm enthalten ist.

9. Imprägnierter Zeolith nach Anspruch 7 oder 8, **dadurch gekennzeichnet, dass** die Partikel im Wesentlichen kugelförmige Partikel sind.

10. Verwendung eines mit mindestens einem hygroskopischen Mineralsalz imprägnierten Zeoliths nach einem der Ansprüche 7 bis 9 zur Speicherung von Wärmeenergie.

11. Verfahren zur Speicherung und Abgabe von Wärmeenergie, das die folgenden aufeinanderfolgenden Schritte umfasst:

(i) Erhitzen eines mit mindestens einem hygroskopischen Mineralsalz imprägnierten Zeoliths nach einem der Ansprüche 7 bis 9 bis auf eine Temperatur und während einer Dauer, die ausreichen, um den imprägnierten Zeolithen zumindest teilweise zu dehydratisieren,
(ii) Aufbewahrung und/oder Transport des imprägnierten, zumindest teilweise dehydratisierten Zeolithen unter Schutz vor Feuchtigkeit, und
(iii) Aussetzen des imprägnierten, zumindest teilweise dehydratisierten Zeoliths gegenüber Wasserdampf, der gegebenenfalls mit anderen Inertgasen, wie beispielsweise Luft, gemischt ist.

12. Verfahren zur Speicherung und Abgabe von Wärmeenergie nach Anspruch 11, **dadurch gekennzeichnet, dass** während des Schritts zur Dehydratisierung (i) der imprägnierte Zeolith bis zu einer Temperatur erhitzt wird, die zwischen 90 und 160 °C enthalten ist und vorzugsweise zwischen 120 und 160 °C enthalten ist.

13. Verfahren zur Speicherung und Abgabe von Wärmeenergie nach Anspruch 11 oder 12, **dadurch gekennzeichnet, dass** die Wärmeenergie, die während des Schritts zur Dehydratisierung (i) zur Erhitzung des imprägnierten Zeoliths dient, Sonnenenergie oder Wärme ist, die durch industrielle Verfahren erzeugt wird.

14. Verfahren zur Speicherung und Abgabe von Wärmeenergie nach einem der Ansprüche 11 bis 13, **dadurch gekennzeichnet, dass** die während des Schritts zur Dehydratisierung (iii) abgegebene Wärme zur Heizung von Gebäuden, insbesondere zur Heizung von Wohnungen, genutzt wird.

**Claims**

1. Method for the preparation of an impregnated zeolite, comprising

(a) preparing an aqueous solution containing 2 to 15% by weight of at least one hygroscopic mineral salt having an enthalpy of dehydration $\Delta H_{dehydration}$ of at least 1200 KJ/Kg
(b) impregnating a hydrated zeolite with the aqueous solution prepared in step (a),
(c) evaporating any water from the aqueous solution in contact with the zeolite,
(d) drying the impregnated zeolite obtained in step (c), by heating to a temperature between 120 °C and 250 °C for a duration of at least 10 hours,

the hydrated zeolite being a zeolite that has been in contact for at least 4 hours at a temperature of 25 °C with an atmosphere having a relative humidity of at least 60%.

2.  Method for the preparation of an impregnated zeolite according to claim 1, **characterised by** the fact that the impregnation step (b) is performed at a temperature between 70 °C and 90 °C and for a period between 30 and 300 minutes, preferably between 60 and 120 minutes.

3.  Method for the preparation of an impregnated zeolite according to any of the preceding claims, **characterised by** the fact that the solution of hygroscopic mineral salt is free of sodium chlorite.

4.  Method for the preparation of an impregnated zeolite according to any of the preceding claims, **characterised by** the fact that the weight ratio of said hygroscopic mineral salt, in its anhydrous form, to said zeolite, also in its anhydrous form, is between 3:97 and 30:70, preferably between 5:95 and 25:75, and in particular between 10:90 and 20:80.

5.  Method for the preparation of an impregnated zeolite according to any of the preceding claims, **characterised by** the fact that the mineral salt is magnesium sulfate.

6.  Method for the preparation of an impregnated zeolite according to any of the preceding claims, **characterised by** the fact that the drying of the impregnated zeolite (step (d)) is performed at a temperature of between 120 and 220 °C, preferably until its weight no longer decreases.

7.  Impregnated zeolite of at least one hygroscopic mineral salt which can be obtained by a method according to any of the preceding claims.

8.  Impregnated zeolite according to claim 7, **characterised by** the fact that it is in the form of particles having an average size of between 0.1 and 5 mm, preferably between 0.5 and 4 mm and in particular between 1 and 3 mm.

9.  Impregnated zeolite according to claim 7 or 8, **characterised by** the fact that the particles are essentially spherical particles.

10. Use of an impregnated zeolite of at least one hygroscopic mineral salt according to any of claims 7 to 9 for storing thermal energy.

11. Method for storing and releasing thermal energy comprising the following successive steps:

    (i) heating an impregnated zeolite of at least one hygroscopic mineral salt according to any of claims 7 to 9 to a sufficient temperature and for a sufficient period for dehydrating said impregnated zeolite at least partially,
    (ii) protecting and/or transporting the at least partially dehydrated impregnated zeolite from humidity and
    (iii) exposing the at least partially dehydrated impregnated zeolite to water vapour, optionally mixed with other inert gases such as air.

12. Method for storing and releasing thermal energy according to claim 11, **characterised by** the fact that during the dehydration step (i) the impregnated zeolite is heated to a temperature between 90 and 160 °C, preferably between 120 and 160 °C.

13. Method for storing and releasing thermal energy according to claim 11 or 12, **characterised by** the fact that the thermal energy used for heating the impregnated zeolite, during the dehydration step (i), is solar energy or heat generated by industrial processes.

14. Method for storing and releasing thermal energy according to any of claims 11 to 13, **characterised by** the fact that the heat released during the hydration step (iii) is used for heating buildings, in particular for heating households.

FIGURE 1

FIGURE 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5314852 A
- US 5885543 A

**Littérature non-brevet citée dans la description**

- New composite sorbent CaCl2 in mesopores for sorption cooling/heating. **TOKAREV M. et al.** International Journal of Thermal Sciences. Elsevier, 2002, vol. 41
- **LEVITSKIJ et al.** Chemical Heat Accumulators : a new approach to accumulating low potential heat. *Solar Energy Materials and Solar Cells,* 1996, vol. 44, 219-235
- **YU. I. ARISTOV ; G. RESTUCCIA ; G. CACCIOLA ; V. N. PARMON.** A family of new working materials for solid sorption air conditioning systems. *Applied Thermal Engineering,* 2002, vol. 22 (2), 191-204
- **B. DAWOUD ; YU. I. ARISTOV.** Experimental study on the kinetics of water vapor sorption on selective water sorbents, silica gel and alumina under typical operating conditions of sorption heat pumps. *International Journal of Heat and Mass Transfer,* 2003, vol. 46 (2), 273-281
- **A. FRENI ; F. RUSSO ; S. VASTA ; M. TOKAREV ; YU.I. ARISTOV ; G. RESTUCCIA.** An advanced solid sorption chiller using SWS-1L. *Applied Thermal Engineering,* 2007, vol. 27 (13), 2200-2204
- **E. A. LEVITSKIJ ; YU. I. ARISTOV ; M. M. TOKAREV ; V. N. PARMON.** ''Chemical Heat Accumulators'': A new approach to accumulating low potential heat. *Solar Energy Materials and Solar Cells,* 1996, vol. 44 (3), 219-235
- **D. ZHU ; H. WU ; S. WANG.** Expérimental study on composite silica gel supported CaCl2 sorbent for low grade heat storage. *International Journal of Thermal Sciences,* 2006, vol. 45 (8), 804-813
- **H. WU ; S. WANG ; D. ZHU.** Effects of impregnating variables on dynamic sorption characteristics and storage properties of composite sorbent for solar heat storage. *Solar Energy,* 2007, vol. 81 (7), 864-871
- **R.T. YANG.** Adsorbents - Fundamentals and Applications. John Wiley & Sons, Inc, 2003